(19) Europäisches Patentamt
European Patent Office
Office européen des brevets

(11) **EP 1 078 154 B1**

(12) **EUROPÄISCHE PATENTSCHRIFT**

(45) Veröffentlichungstag und Bekanntmachung des Hinweises auf die Patenterteilung:
**11.09.2002  Patentblatt 2002/37**

(51) Int Cl.$^7$: **F02D 41/24**, F16H 61/38, B60K 41/14

(21) Anmeldenummer: **99916845.3**

(22) Anmeldetag: **22.03.1999**

(86) Internationale Anmeldenummer:
**PCT/EP99/01881**

(87) Internationale Veröffentlichungsnummer:
**WO 99/058837 (18.11.1999 Gazette 1999/46)**

(54) **VERFAHREN ZUR ABSTIMMUNG EINES TRIEBSTRANGMANAGEMENTS EINES KRAFTFAHRZEUGS MIT EINER VERBRENNUNGSMASCHINE**

METHOD FOR REGULATING DRIVE-TRAIN MANAGEMENT IN A MOTOR VEHICLE WITH AN INTERNAL COMBUSTION ENGINE

PROCEDE DE REGLAGE DU SYSTEME DE GESTION DE L'ENSEMBLE TRANSMISSION D'UN VEHICULE AUTOMOBILE POURVU D'UN MOTEUR A COMBUSTION INTERNE

(84) Benannte Vertragsstaaten:
**AT DE ES FR GB IT PT SE**

(30) Priorität: **12.05.1998  DE 19821167**

(43) Veröffentlichungstag der Anmeldung:
**28.02.2001  Patentblatt 2001/09**

(73) Patentinhaber: **Volkswagen Aktiengesellschaft**
**38436 Wolfsburg (DE)**

(72) Erfinder:
• **BOSSE, Rolf**
**D-38440 Wolfsburg (DE)**
• **FREITAG, Achim**
**D-38100 Braunschweig (DE)**

(74) Vertreter: **Meyer, Enno, Dr.**
**Weser & Kollegen**
**Patentanwälte**
**Radeckestrasse 43**
**81245 München (DE)**

(56) Entgegenhaltungen:
DE-A- 4 133 059          DE-A- 19 625 936
DE-A- 19 637 210        US-A- 4 964 318

• **EGGERT U: "CVT-GETRIEBE: ELEKTRONISCHE REGELUNG UND FAHRDYNAMIK" VDI Z, Bd. 134, Nr. SPECIAL, 1. März 1992 (1992-03-01), Seiten 26, 29-30, 33 -, XP000297806 ISSN: 0042-1766**

**Beschreibung**

Die Erfindung betrifft ein Verfahren zur Abstimmung eines Triebstrangmanagements eines mit einer Verbrennungsmaschine ausgerüsteten Kraftfahrzeugs, und betrifft Insbesondere ein Verfahren zur Abstimmung des Antriebsstrangs hinsichtlich des Motors und des Getriebes unter Berücksichtigung von Gesamt-Fahrzeugparametern, Fahrzustand und Zielsetzung der Optimierung. Ferner betrifft die Erfindung eine Vorrichtung zur Durchführung des Verfahrens.

Bei der Auslegung eines Kraftfahrzeugs ist die Abstimmung eines einzelnen Aggregats, wie beispielsweise Motor oder Getriebe, eine aufwendige und anspruchsvolle Tätigkeit. Bei der Kombination mehrerer Aggregate eines Kraftfahrzeugs, beispielsweise zu einem Antriebsstrang, wird die Abstimmung und Optimierung der Kombination wesentlich komplexer, da das Zusammenspiel mehrerer Komponenten berücksichtigt werden muß. Da es bei der Gesamtabstimmung sehr auf Feinheiten ankommt, ist eine exakte und zielorientierte Applikation mehrerer Aggregate schwierig und unter Umständen kaum möglich.

Derzeit wird die Auslegung eines Triebstranges eines Kraftfahrzeugs, d.h. die Optimierung des Motors samt Abgasanlage und des Getriebes, durchgeführt, indem zuerst eine Optimierung des Motors hinsichtlich der erwünschten Fahrleistungen, des gewünschten Emissionsverhalten usw. durchgeführt wird. Dabei werden Kennlinienfelder des Motors auf einem Prüfstand durch gezielte Veränderung von Motorparametern aufgenommen. Aus den gemessenen Kennlinienfeldern wird eine "optimale" Motorsteuerung abgeleitet. An diesen so hinsichtlich bestimmter Vorgaben optimierten Motor wird ein Getriebe und/oder weitere Fahrzeugeigenschaften, wie Fahrwerk, Reifen etc., angepaßt. Eine Rückwirkung dieser weiteren Fahrzeugauslegung auf die Motoroptimierung wird nicht oder nur unvollkommen berücksichtigt. Nachteilig ist, daß einerseits die Abstimmung einzelner Komponenten aufwendig ist und nicht automatisiert erfolgt und es andererseits möglich ist, daß eine Optimierung des Gesamtsystems Ahtriebsstrang nicht erreicht wird.

DE-A-41 33 059 offenbart ein Verfahren und eine Einrichtung zum Abstimmen eines Triebstrangmanagement eines Kraftfahrzeugs, bei dem ein Kennfeld vorgegeben ist, bestimmte Leistungsbetriebspunkte angefahren werden und die Motorabstimmung mit einem vorgegebenen Algorithmus in Hinblick auf vorgegebene Kriterien optimiert wird. Ein Motorkennfeld wird dann mit den optimierten Daten überschrieben.

Der Erfindung liegt daher die Aufgabe zugrunde, ein Verfahren sowie eine Vorrichtung zur automatischen Abstimmung von Komponenten eines Antriebsstrangs, insbesondere ein Verfahren zur automatisierten Abstimmung des gesamten Antriebsstrangs eines Kraftfahrzeugs unter Berücksichtigung sonstiger Fahrzeugparameter zu schaffen.

Diese Aufgabe wird durch die Merkmale eines der Verfahren nach Anspruch 1 und Anspruch 2 sowie durch eine Vorrichtung nach Anspruch 23 gelöst. Bevorzugte Ausgestaltungen der Erfindung sind Gegenstand der Unteransprüche.

Die Erfindung wird nachfolgend anhand der Zeichnungen erläutert.

Fig. 1     zeigt ein Ablaufdiagramm des Getriebe-Tools.

Fig. 2     zeigt ein Beispiel eines optimierten Wegs durch ein Gütekennfeld eines Dieselmotors, das aus den Größen NOx und Partikel gebildet ist,

Fig. 3     zeigt eine schematische Darstellung des Motor-Tools,

Fig. 4     zeigt die Gewichtung der Betriebspunkte,

Fig. 5     zeigt eine Einteilung der Meßwerte eines Betriebspunktes im Gütebereich,

Fig. 6     zeigt ein Flußdiagramm zur Auswahl des besten Meßpunktes,

Fig. 7     zeigt ein Beispiel einer Applikationsvariation in einem Motorbetriebspunkt, und

Fig. 8     zeigt einen Gesamtablaufplan des Triebstrangmanagement-Applikationswerkzeugs, der das Zusammenwirken der einzelnen Module darstellt.

Zum besseren Verständnis werden die Module des Triebstrangmanagement zuerst als stand-alone Einheiten beschrieben. Diese Vorgehensweise ist auch daher gerechtfertigt, da einzelne Module des Triebstrangmanagement-Applikationswerkzeugs für bestimmte Optimierungsanwendungen einzeln verwendet werden können und für die komplexere Optimierung einer Einheit aus mehreren Fahrzeugkomponenten die Module in Kombination verwendet werden. Als Abschluß werden zwei Diagramme erläutert, das die Möglichkeit einer zusammenhängenden automatisierten Abfolge der einzelnen Tools beschreiben.

Getriebe-Tool

Das Getriebe ist ein Aggregat des Antriebsstrangs und stellt durch die Übersetzung die aktuelle Motordrehzahl ein, d.h. durch die Getriebeübersetzung läßt sich in Abhängigkeit von der Fahrzeuggeschwindigkeit die Motordrehzahl einstellen.

Bei einem stufenlosen Getriebe (CVT-Getriebe) läßt sich die Motordrehzahl vollständig von der Fahrzeuggeschwindigkeit lösen, zumindest in einem bestimmten, durch die maximale Drehzahl vorgegebenen Bereich. Durch ein Fahrverhaltenskennfeld wird ein Zusammenhang zwischen der Motordrehzahl als Funktion der Fahrgeschwindigkeit und der Stellung eines Pedal-Wert-Gebers (PWG) gegeben, wobei dieses Kennfeld im Getriebesteuergerät abgelegt ist.

Die Ermittlung und Optimierung einer zielorientierten Applikation für das Fahrverhaltenskennfeld wird durch das Getriebe-Tool (CVT-Getriebe-Tool) vorgenommen.

Zur Durchführung einer Optimierung müssen Zielsetzungen der Optimierung vorgegeben werden. Zielsetzungen können unterschiedliche Anforderungen der Fahrzeugnutzer, d. h. Kunden, des Staates, der Umwelt und der Automobilindustrie sein. Um eine Optimierung durchführen zu können, müssen sich diese Zielsetzungen in Kennfeldern darstellen lassen. Dies ist z. B. möglich für Emissionen, Verbrauch und bedingt für den Komfort.

Diese Kennfelder, die die Optimierungsziele und damit die zu optimierenden Größen beinhalten, sind Eingangsgrößen des Getriebe-Tools. Mit der Optimierung des Getriebe-Tools sind keine Optimierungen einzelner Betriebspunkte eines Kennfeldes möglich, dies ist Gegenstand des Motor-Tools. sondern es wird eine Optimierung, d. h. eine Auswahl, der besten Betriebspunkte vorgenommen, und zwar vorzugsweise automatisch.

Nach der Ermittlung der als Eingangsdaten des Getriebe-Tools dienenden Kennfelder muß für jedes Kennfeld eine Normierung de physikalischen Größen auf eine Einheitsgröße erfolgen, da ansonsten eine gemeinsame Verarbeitung verschiedener physikalischer Größen nicht möglich ist.

In dieser Ausführungsform erfolgt eine Normierung auf ein Wortlänge von 8 Bit, d. h. es erfolgt eine Abbildung der physikalischen Größe auf einen Wertebereich von 0 bis 255. Damit ist eine Einteilung in "gute Werte" (ca. 0-50), "mittel gute Werte" (51 - 199) und schlechte Werte (200-255) möglich. Die angegebenen Werte sind nur als Beispiel zu betrachten. Die Einteilung der normierten Meßwerte in "gute", mittel gute" und "schlechte" Werte wird entsprechend den Anforderungen der Optimierung durchgeführt.

Die Normierung kann durch verschiedene Funktionen umgesetzt werden. Beispielsweise werden Emissionsgrößen üblicherweise linear abgebildet, da geringe Emissionswerte als gut und hohe Emissionswerte als schlecht betrachtet werden. Ferner kann eine geknickte Normierungsfunktion verwendet werden, die beispielsweise einen Bereich der physikalischen Werte auf nur einen Wert abbildet. Andere Normierungen, wie mehrfach geknickte Normierungsfunktionen, sind ebenfalls möglich.

Nach der Bewertung und Normierung der Eingangskennfelder auf einen gemeinsamen Wertebereich ist eine Verknüpfung, d.h. Optimierung, mehrerer verschiedener Größen, die im folgenden als Gütegrößen bezeichnet werden, möglich. Femer erfolgt eine Transformation des Lastsignals von Drehzahl und Drehmoment in Drehzahl und Motorleistung, da der Motor die einzige Leitungsquelle des Fahrzeugs ist, während alle anderen Fahrzeugkomponenten Leistungssenken sind. Eine Betätigung des PWGs (d. h. des Gaspedals) ist eine Leistungsanforderung an das Fahrzeug, die über die Drehzahl mit Hilfe des CVT-Getriebes frei eingestellt werden kann, sofern sich die Leistung nicht ändert.

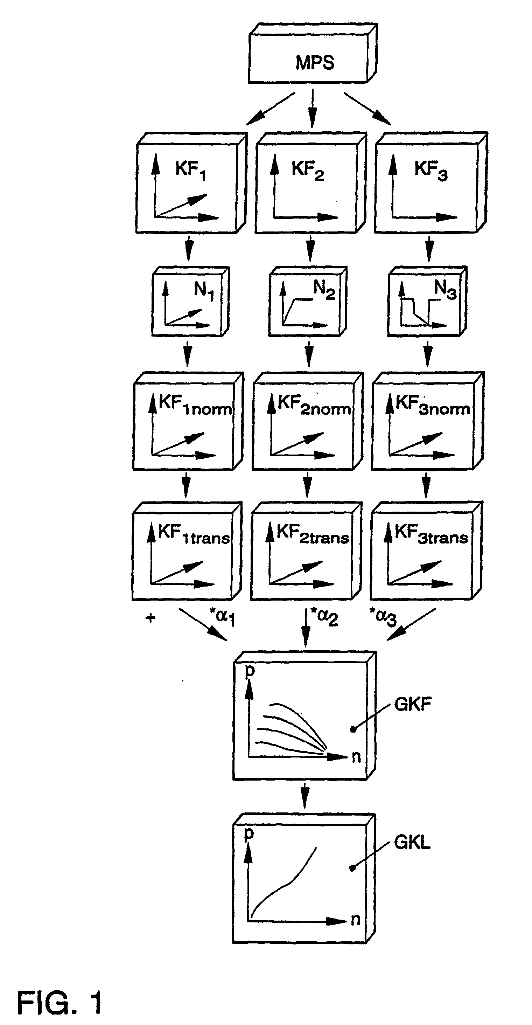

Fig. 1 zeigt ein Ablaufdiagramm zur Optimierung der Motorbetriebspunkte eines Fahrzeugs mit CVT-Getriebe, in dem die obigen Ausführungen dargestellt sind. Auf einem Motorprüfstand MPS wird ein Motor vermessen und es ergeben sich die in Fig. 1 dargestellten, als Eingangsdaten verwendeten Kennfelder $KF_1$, $KF_2$ und $KF_3$. Die Begrenzung auf drei Kennfelder ist willkürlich und dient nur zur besseren Erläuterung. Die Anzahl n der betrachteten Kennfelder ist eine natürliche Zahl mit $n \geq 1$. Diese Kennfelder können beispielsweise Emissionskennfelder unterschiedlicher Emissionsgrößen sein. In einem ersten Schritt werden die Kennfelder $KF_1$, $KF_2$ und $KF_3$ mit unterschiedlichen Normierungskennlinien $N_1$, $N_2$ und $N_3$ normiert und es ergeben sich normierte Kennfelder $KF_{1norm}$, $KF_{2norm}$ und $KF_{3norm}$. Diese Kennfelder werden von Motordrehmoment in Motorleistung transformiert, so daß die transformierten Kennfelder $KF_{1trans}$, $KF_{2trans}$ und $KF_{3trans}$ ergeben. Diese transformierten Kennfelder $KF_{1trans}$, $KF_{2trans}$ und $KF_{3trans}$ können nun über eine entsprechende Vorschrift zu einem gemeinsamen Gütekennfeld GKF zusammengefaßt werden, indem beispielsweise die mit Gewichtsfaktoren $\alpha1$, $\alpha2$ und $\alpha3$ versehenen transformierten Kennfeldpunkte von $KF_{1trans}$, $KF_{2trans}$ und $KF_{3trans}$ addiert werden. Andere Vorschriften zur Bildung des Gütekennfeldes GKF sind jedoch möglich.

Die Leistung ist die notwendige Größe zum Beschleunigen eines Fahrzeugs, wobei unabhängig von der Motordrehzahl gilt, daß bei gleicher Leistung das Beschleunigungsverhalten des Fahrzeugs gleich bleibt. Es kann daher zu jeder Leistung die Drehzahl eingestellt werden, bei der z. B. die Emission am niedrigsten ist. Es wird daher beim letzten Schritt für die Berechnung einer Applikation für das Fahrverhaitenskennfeid des CVT-Getriebes der beste Weg durch das Gütekennfeld GKF ermittelt. Die Ermittlung des besten Weges durch das Gütekennfeld kann nach verschiedenen Optimierungsstrategien erfolgen. Damit läßt sich für jedes Leistungsinkrement der beste Betriebspunkt ermitteln, d.h. es wird die optimale Drehzahl des Motors berechnet, die sich aus einem Kompromiß aus den verschiedenen zu optimierenden Eingangsgrößen ergibt.

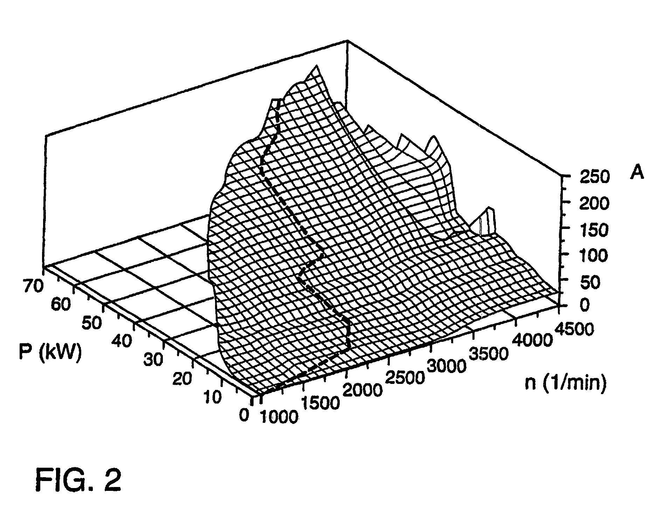

Fig. 2 zeigt einen durch ein Gütekennfeld eines direkteinspritzenden Dieselmotors ermittelten optimalen Weg (dick gestrichelte Linie), wobei das Gütekennfeld aus zwei Größen, nämlich NOx-Emission und emittierten Partikeln, ermittelt wurde, die im Verhältnis 1:1 gewichtet wurden.

Motor-Tool

Das Modul Motor-Tool dient dazu, verschiedene Gütegrößen wie Emissionen und Verbrauch für den einzelnen Betriebspunkt zu optimieren. Mit anderen Worten, mit dem Motor-Tool wird ein optimiertes Kennfeld erzeugt. Es werden mit diesem Werkzeug verschiedene applizierbare Größen eines Motors, vorzugsweise eines direkteinspritzenden Dieselmotors, die entscheidenden Einfluß auf das Emissions- und Verbrauchsverhalten des Motors haben, ermittelt und optimiert. Die zu optimierenden Größen werden ebenfalls als Gütegrößen bezeichnet.

Das Motormanagement eines direkteinspritzenden Dieselmotors weist die folgenden Regelungen der Hauptfunktionen auf:

Einspritzmenge,
Spritzbeginn bzw. Förderbeginn
Abgasrückführung,
Ladedruck, und
sonstige Funktionen.

Zur Beeinflussung bzw. Optimierung der Gütegrößen dienen die Verstellgrößen Spritzbeginn bzw. Förderbeginn, Abgasrückführung und Ladedruck. Von der Einstellung dieser Verstellgrößen hängt der Wert der Gütegrößen ab. Für jeden Betriebspunkt muß eine exakte Einstellung der Verstellgrößen durchgeführt werden.

Zur Optimierung der Betriebspunkte mit dem Modul Motor-Tool können die im folgenden aufgeführten Eingangsinformationen verwendet werden:

Festlegung der Gütegrößen
Zielwerte für Gütegrößen
Optimierungsstrategie (Wichtung der Gütegrößen)
Betriebspunkt-Charakterisierung mit Gütegrößen
Gütegrößen-Kennfeld
Gütegrößen-Meßvariation

Derzeit ist die Optimierung der Gütegrößen auf zwei plus eine beschränkt. Mit anderen Worten, zwei Gütegrößen G1 und G2, die im folgenden als Hauptgütegrößen bezeichnet werden, können optimiert werden, während die dritte Gütegröße G3 bei der Optimierung in der Art mitberücksichtigt wird, daß deren Über- bzw. Unterschreitung eines vorgegebenen Wertes nicht erfolgt.

Für die beiden Hauptgütegrößen G1 und G2 muß ein angestrebtes Ziel bezogen auf einen charakteristischen Fahrzyklus angegeben werden. Aus den den Motorbetriebspunkt charakterisierenden Werten und den dazugehörigen Gütegrößen wird eine Rückrechnung der Ziele für die Einzelbetriebspunkte gemacht. Über eine Variation der oben genannten Verstellgrößen Spritzbeginn bzw. Förderbeginn,, Abgasrückführung und Ladedruck, die für die einzelnen Betriebspunkte zum Erstellen eines Ausgangskennfeldes gemessen werden, können bezogen auf die gewünschten Ziele für die einzelnen Betriebspunkte optimierte Einstellungen ermittelt werden.

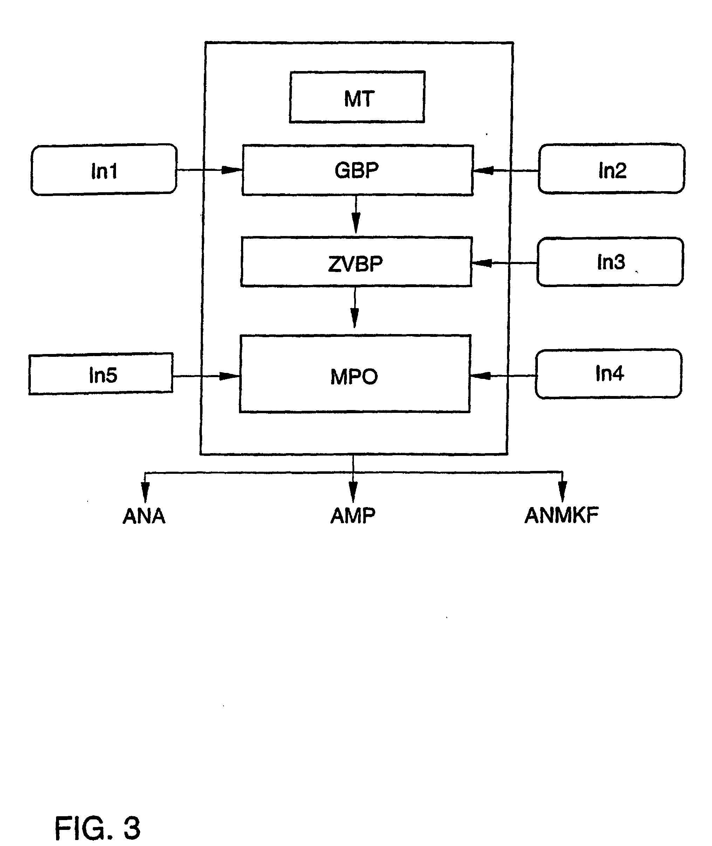

Fig. 3 zeigt den schematischen Ablaufplan des Moduls Motor-Tools MT. Als erster Schritt erfolgt eine Gewichtung der Betriebspunkte GBP, der als Eingangsdaten In1 die Betriebspunkte mit den Emissionen benötigt, insbesondere die Modalwerte aus der Hochrechnung. Ferner benötigt der erste Schritt GBP die Eingabeparameter In2, nämlich die zu optimierenden Gütegrößen G1 und G2 sowie u.U. die zu berücksichtigende Gütegröße G3. Der Schritt GBP ergibt den prozentualen Anteil der Schadstoffemissionen der einzelnen Motorbetriebspunkte. Im nächsten Schritt ZVBP werden unter Berücksichtigung des Eingabeparameter In3, der die Zielwerte der Gütegrößen des Abgasteste enthält, die Zielwerte für die einzelnen Betriebspunkte anhand der Gesamtziele für den Abgastest ermittelt. Anschließend erfolgt der Optimierungsschritt MPO mit den Eingangsdaten In4, die durch Dateien mit Meßwerten vom Motorprüfstand gebildet werden, und In5, die das benötigte Emissionskennfeld der Applikation enthält. Mit Hilfe der Eingangsdaten wird eine Optimierung der beteiligten Betriebspunkte vorgenommen. Mögliche Ausgaben sind die Ausgabe der neuen Applikation ANA, die Ausgabe der Anforderung eines Meßprogramms AMP und die Ausgabe des neuen Motorkennfeldes ANMKF.

Der erste Schritt für die Optimierung im Motor-Tool ist die Ermittlung der relevanten Motorbetriebspunkte, die optimiert werden sollen, um den gesamten Vorgang der Optimierung auf das Wesentliche zu beschränken, ohne daß die Qualität abnimmt. Im gesamten Ablauf einer Motoroptimierung stellt die Messung der Verstellgrößenvariation den größten Aufwand dar, der durch die Beschränkung der verwendeten Betriebspunkte auf ein Minimum reduziert werden soll. Um ein Ziel vorgeben zu können, muß daher eine Festlegung auf realistische Randbedingungen erfolgen. Realistisch ist der Einsatz eines Motors In einem definierten Fahrzeug unter jeweils gleichen Umweltbedingungen, wie dies beispielsweise auf einem Rollenprüfstand der Fall ist. Daher wird auch vorzugsweise ein Emissionstest als charakteristisches Fahrprofil benutzt.

In einem Modul Hochrechnung, das später beschrieben werden wird, wird nach vorheriger Spezifikation der wesentlichen oder der gesamten (falls möglich) Fahrzeugeigenschaften und der Testbedingungen das Verhalten des Motors unter realistischen Bedingungen nachgebildet werden. Als wesentliches Ergebnis der Hochrechnung gehen aus dieser die Modalwerte, die die Emissions- und Steuergeräte-Größen in Sekundenintervallen sind, hervor, die als Eingangsgrößen In1 in das Motor-Tools MT eingehen.

Die Modal- oder Sekundenwerte enthalten die Motordrehzahl, den effektiven Mitteldruck bzw. das Drehmoment und die Motorleistung, die die Betriebspunkte des Motors enthalten. Ferner sind die zu den Betriebspunkten gehörenden Emissionswerte in den Modalwerten enthalten.

Aus den Modalwerten MW ermittelt das Motor-Tool MT in einem erstem Schritt die im Fahrprofil benutzten Betriebspunkte des Motors und erstellt für diese Betriebspunkte eine zeitliche Klassierung der Gütegrößen. Anschließend wird daraus in einem nächsten Schritt die Verteilung der Massengewichtung der einzelnen Gütegrößen erstellt. Daraus ergibt sich der tatsächliche prozentuale Anteil der Gütegrößen in den einzelnen Betriebspunkten. Beispielsweise ist der zeitliche Anteil des Leerlaufs sehr hoch. Allerdings entstehen in diesem Bereich wenig Emissionen. Demgegenüber hat der Bereich höherer Last einen deutlich geringeren zeitlichen Anteil, allerdings ist in diesem Bereich die Emission und der Kraftstoffverbrauch deutlich höher. Die verwendeten Betriebspunkte sind vorteilhaft die, die durch die Klassierung ermittelt wurden und die einen minimalen prozentualen Wert überschreiten. Beispielsweise können nur Betriebspunkte berücksichtigt werden, deren prozentualer Anteil größer als 1 % ist. Die Schwelle ist variabel und kann von dem Benutzer des Motor-Tools eingestellt werden. Dennoch können vereinzelt Betriebspunkte, die die Schwelle unterschreiten, berücksichtigt werden, wenn beispielsweise für diese Betriebspunkte Variationsmessungen existieren.

Auf der Basis der oben beschriebenen Gewichtung der Gütegrößen und dem vom Benutzer geforderten Gesamtziel wird für jeden Betriebspunkt das notwendige Ziel berechnet, d. h. eine Optimierung durchgeführt.

Die Messungen vom Motorprüfstand werden in einem vorgegebenen Verzeichnis abgelegt. Das Modul Motor-Tool interpretiert alle in diesem Verzeichnis vorhandenen Meßdateien und durchsucht die Dateien nach relevanten Messungen. D. h. es wird für jede Datei beurteilt, ob es Messungen gibt, die für die Beurteilung des aktuellen Betriebspunkts benutzt werden können. Weiterhin wird in der Oberfläche des Motor-Tools ein Bereich definiert, der eine Spanne um einen festen Betriebspunkt beschreibt. Ein Beispiel ist wie folgt. Der aktuelle Betriebspunkt liegt bei n = 1500 1/min und Md = 50 Nm, die Spanne wird als n = 20 U/min und Md = 2 Nm definiert. Gesucht wird dann nach Messungen die eine Drehzahl von 1490 bis 1510 U/min und ein Drehmoment zwischen 49 und 51 Nm haben. Mit anderen Worten, die Optimierung des Motors ist nicht auf die aus den Modalwerten ermittelten Betriebspunkte beschränkt, sondern er können auch naheliegende bzw. angrenzende Betriebspunkte verarbeitet werden.

Sofern es ausreichend Messungen in diesem akzeptablen Bereich gibt, werden diese für die Beurteilung der besten Einstellung der Verstellgrößen herangezogen. Falls nicht genug Messungen vorhanden sind, erstellt das Programm ein Meßauftrag ANA, in dem jeweils der Betriebspunkt und die erwarteten Einstellungen der Versteligrößen angegeben sind. Wenn Werte teilweise vorhanden sind, können Erwartungswerte ermittelt und ausgegeben werden. Sind keine Meßinformationen vorhanden, müssen erst Messungen, z. B. mit der Serieneinstellung des Motors gemacht werden. Daraus können anschließend Erwartungswerte innerhalb vorgegebener Grenzen für die Verstellgrößen ermittelt werden.

Es gibt unterschiedliche begrenzende Kriterien. Es werden zum einen Grenzwerte vorgegeben (im Steuergerät appliziert), die dem Schutz einzelner Bauteile dienen. Zum anderen gibt es physikalische Grenzen, die nicht überschritten werden können. Ein Beispiel ist die Abgasrückführung. Es hängt von den Druckverhältnissen an der Einleitung der Abgase in dem Frischluftkanal ab, wie viel Abgas der Frischluft zugeführt werden kann. Es muß ein Druckgefälle zwischen Abgas- und Frischluftbereich vorhanden sein. Dieses Druckgefälle hängt u.a. von der Motordrehzahl ab. Es hat also keinen Sinn höhere Abgasrückführraten einzustellen als sie möglich sind. Es sollen nur Meßvorschläge für erreichbare und sinnvolle Werte der Verstellgrößen vom Motor-Tool vorgeschlagen werden.

Nachdem die fehlenden Messungen am Motorprüfstand durchgeführt wurden, können diese Meßdateien in das entsprechende Verzeichnis gelegt werden und der oben beschriebene Vorgang wird wiederholt. Dies wird solange durchgeführt bis ausreichend Messungen vorhanden sind und die Ermittlung der Applikationswerte für die Verstellgrößen abgeschlossen werden kann.

Wenn alle notwendigen Daten zur Ermittlung der besten Applikation vorhanden sind, erstellt das Motor-Tool ein neues Emissionskennfeld ANMKF. Dabei wird ein vorhandenes Kennfeld als Grundlage benutzt, in dem die relevanten Betriebspunkte korrigiert werden, d. h. es werden die optimierten Werte der Betriebspunkte eingetragen. Es ist auch möglich, wenn kein Kennfeld als Grundlage vorhanden ist, ein neues Kennfeld zu erstellen, indem dann nur die Betriebspunkte enthalten sind, die durch vorherige Kenntnis im Motor-Tool betrachtet wurden. Abgelegt werden Informationen, die den Betriebspunkt charakterisieren, d.h. die Motordrehzahl und der effektive Mitteldruck sowie die Werte der Gütegrößen. Dieses Kennfeld wird derartig erstellt, daß es als Eingangsdatei für eine nachfolgende Hochrechnung genutzt werden kann.

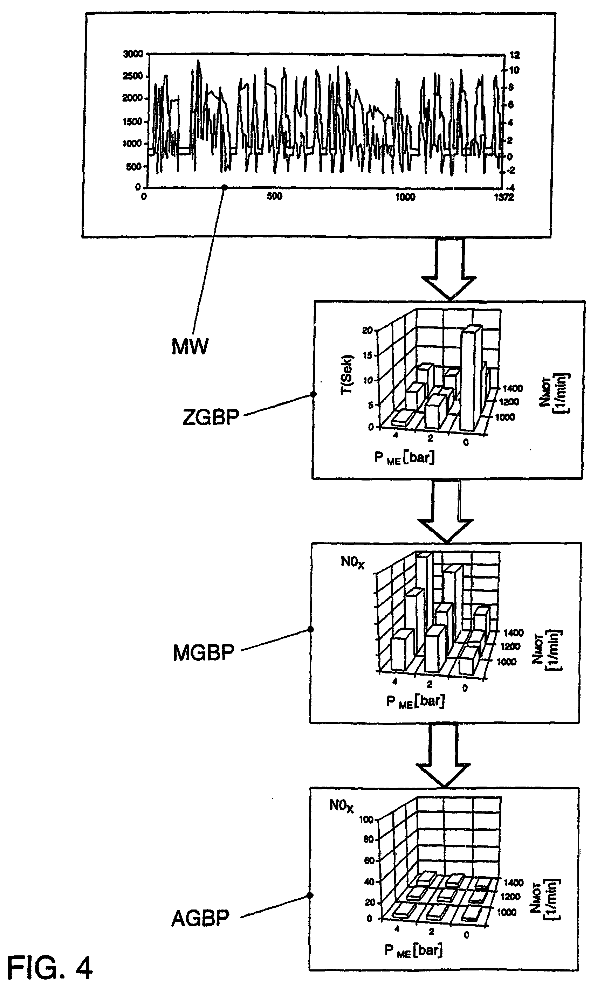

Im folgenden wird die Optimierung der Motorparameter anhand der Figuren 4, 5, und 6 genauer erläutert, wobei oben bereits erwähnte Zusammenhänge im Detail erörtert werden.

Fig. 4 zeigt die oben bereits beschriebene Gewichtung der Betriebspunkte im Detail. Durch das Geschwindigkeitsprofil des Abgastestes, d. h. der Modalwerte MW, werden sehr viele Betriebspunkte des Motorkennfeldes durchfahren. Zunächst wird eine Klassierung vorgenommen, bei der die Betriebspunkte der Modalwerte MW in ein vom Benutzer einzustellendes Raster, gegeben durch einen Drehzahlabschnitt und einen Mitteldruckabschnitt, eingeteilt werden. Die Verweildauer des Motors in jedem Kennfeldraster wird ermittelt, so daß man eine zeitliche Gewichtung der Betriebspunkte ZGBP erhält.

Als zweiter Schritt erfolgt eine Massengewichtung der Betriebspunkte MGBP. Dabei wird für jeden Rasterbereich die entstehende Schadstoffmasse der jeweiligen Gütegröße ermittelt.

Zuletzt wird der prozentuale Anteil AGBP der Klassierungsraster an der Gesamtemission berechnet.

Durch die Gewichtung der Betriebspunkte ergeben sich die Betriebsbereiche mit großem Optimierungspotential. Die Betriebspunkte mit einem sehr geringen Anteil an der Gesamtemission werden nicht an der Optimierung beteiligt, es sei denn, für diese sind bereits Messungen vorhanden. Dabei wird durch den Benutzer vorgegeben, ab welchem Anteil eine Optimierung erfolgt.

Die zeitliche Gewichtung wird außerdem als Ausgangsdatei dem Modul Getriebe-Tool GT zur Verfügung gestellt, das die Optimierung entsprechend der gewichteten Leistungsbereiche durchführt. Weiterhin wird eine Klassierungsdatei erstellt, die zur statistischen Auswertung dient.

Die Zielvorgabe für einen Abgastest sind z.B. die gesetzlichen Grenzwerte der Abgasemissionen, wobei auch jeder andere Wert verwendet werden kann. Dieser Zielwert gibt an, welche Masse des Schadstoffes durchschnittlich pro zurückgelegter Wegstrecke emittiert werden darf.

Bei der Festlegung der Zielvorgaben der einzelnen Betriebspunkte muß berücksichtigt werden, daß die oben ermittelten Betriebspunkte mit einem sehr kleinen Anteil an der Gesamtemission nur optimiert werden sollen, wenn Messungen dieser Punkte bereits vorliegen. Daher muß ein neues Gesamtziel für die verbleibenden zu optimierenden Punkte gesetzt werden. Der neue Gesamtzielwert muß in einen Absolutwert umgerechnet werden und ergibt sich nach Gl. 1.

$$\text{Ziel}_{i,neu} = \text{Zrel}_{i,ges} \cdot S_{ges} - \frac{1}{3600} \Sigma (\text{Gütegröße}_{i,min} \cdot t) \qquad \text{Gl.1}$$

mit

| | |
|---|---|
| $\text{Ziel}_{i,neu}$ | Neues Gesamtziel der Gütegröße i [g] |
| $\text{Ziel}_{i,ges}$ | Zielvorgabe der Gütegröße i [g/km] |
| $S_{ges}$ | Gesamtstrecke [km] |
| $\text{Gütegröße}_{i,min}$ | Emission der Gütegröße i [g/h] mit Massenanteil unterhalb des Minimalwertes |
| t | Verweildauer [s] |

Die Zielvorgabe jedes Betriebspunktes ergibt sich aus der Abweichung des Gesamttestergebnisses vom Gesamtziel. Jeder Betriebspunkt muß um den Anteil verringert werden, um den das Ergebnis vom Ziel abweicht. Gl. 2 beschreibt den Zusammenhang.

$$\text{Ziel}_{i,j} = \text{Gütegröße}_{i,j} \qquad \text{Gl. 2}$$

mit

| | |
|---|---|
| $\text{Ziel}_{i,j}$ | Zielwert der Gütegröße i im Betriebspunkt j [g/h] |
| $\text{Ziel}_{i,neu}$ | Neues Gesamtziel der Gütegröße i [g] |
| $\text{Gütegröße}_{i,min}$ | Emission der Gütegröße i [g/h] mit Massenanteil oberhalb des Minimalwertes |

Wird die Motoroptimierung innerhalb des Triebstrangmanagements eingesetzt, so muß berücksichtigt werden, daß das Modul Motor-Tool MT durch die Optimierung der Getriebeparameter des CVT-Getriebes mehrfach gestartet wird. Dabei werden auch Betriebsbereiche entstehen, die bereits vom Motor-Tool MT optimiert wurden. Da diese nicht weiter verbessert werden können, ergeben sich neue Zielvorgaben für die übrigen Betriebspunkte. Der Zielwert der übrigen Punkte verringert sich daher um den Teil der bereits optimierten Betriebspunkte, so daß sich Gl. 1 in Gl. 3 ändert:

$$\text{Ziel}_{i,neu} = \text{Ziel}_{i,ges} \cdot S_{ges} - \frac{1}{3600} \{ \Sigma (\text{Gütegröße}_{i,min} \cdot t) - \Sigma (\text{Gütegröße}_{i,opt} \cdot t)\} \qquad \text{Gl.3}$$

mit

$\text{Gütegröße}_{i,opt}$     $\text{Gütegröße}_i$ [g/h], optimiert

Die Zielvorgabe der Betriebspunkte ergibt sich wiederum nach Gl. 2.

Für einen Einsatz des Motor-Tools im Triebstrangmanagement ist es sinnvoll, auch Betriebspunkte zu optimieren, die im Abgaszyklus nicht durchfahren werden. So können insbesondere auch Betriebspunkte optimiert werden, die im Kennfeld direkt an im Abgaszyklus auftretende Betriebspunkte angrenzen. Dies erfolgt vorteilhaft bei jeder Iteration. Dies eröffnet dem Getriebe-Tool die Möglichkeit, auch auf diese Punkte zurückzugreifen. Die Zielvorgabe für diese Betriebspunkte wird vorzugsweise aus dem Gütekennfeld und der Gesamtzielvorgabe berechnet.

Diese Option ist einstellbar.

Die Meßdaten sind in Dateien entweder als Kennfelder oder in sogenannten Lastschnitten abgelegt. Als Lastschnitte werden Messungen bezeichnet, die bei konstanter Drehzahl über den gesamten Lastbereich durchgeführt werden.

Für die Mittelwerte der im vorangegangenen ermittelten Klassierungsbereiche werden Variationsmessungen benötigt. Es muß für die Drehzahl und den Mitteldruck einen Bereich angeben werden, um den der gemessene Wert vom angeforderten abweichen darf. Diese Angabe sollte im Bereich der Meßgenauigkeit der Prüfstandsmessungen liegen.

Wenn innerhalb des angegebenen Bereichs keine Messungen durchgeführt worden sind, werden Meßwerte gesucht, zwischen denen interpoliert werden kann. Der Benutzer muß daher den Bereich festlegen, in dem zwischen zwei Betriebspunkten interpoliert werden kann. Ist keine Interpolation möglich, wird der Betriebspunkt in ein Meßprogramm aufgenommen, welches am Prüfstand durchgeführt werden muß. Dabei werden nur die Betriebspunkte in das Meßprogramm aufgenommen, deren Anteil an der Gesamtemission höher als der vom Benutzer anzugebende Mindestanteil ist.

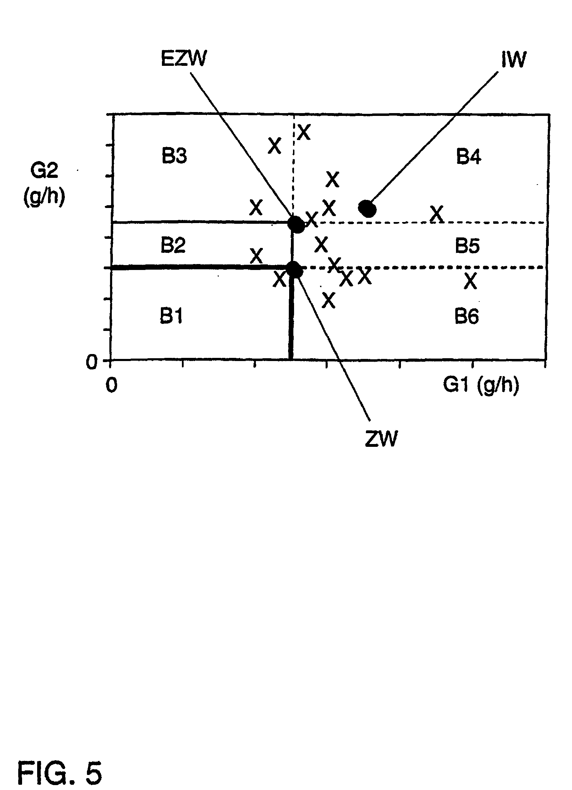

Nach dem Einlesen der Prüfstandsergebnisse erhält man für jeden Betriebspunkt mehrere Parametervariationen. In Fig. 5 sind die Variationsmessungen für einen Betriebspunkt nach den zu optimierenden Gütegrößen aufgetragen und in Gütebereiche eingeteilt. Zusätzlich ist die durch einen Zielwert ZW bestimmte Zielvorgabe und der von der Hochrechnung ermittelte Ist-Wert IT dargestellt.

Fig. 5 zeigt die Einteilung der Meßwerte eines Betriebspunktes in Gütebereiche. Ist eine der beiden Gütegrößen priorisiert worden, so ist diese in Fig. 5 als Gütegröße G1 bezeichnet. Die Meßwerte X im Bereich B1 liegen innerhalb der durch den Zielwert ZW bestimmten Zielvorgaben des Betriebspunktes. Der Bereich B2 stellt den durch den erweiterten Zielwert EZW erweiterten Zielbereich dar, in den die maximalen Zielüberschreitungen der zweiten Gütegröße G2 entsprechend der Priorisierung eingeflossen sind. In den mit B3, B5 und B6 bezeichneten sonstigen Bereichen wird das Ziel EZW nur für eine der beiden Gütegrößen G1, G2 erreicht, im Bereich B4 wird kein Ziel erreicht.

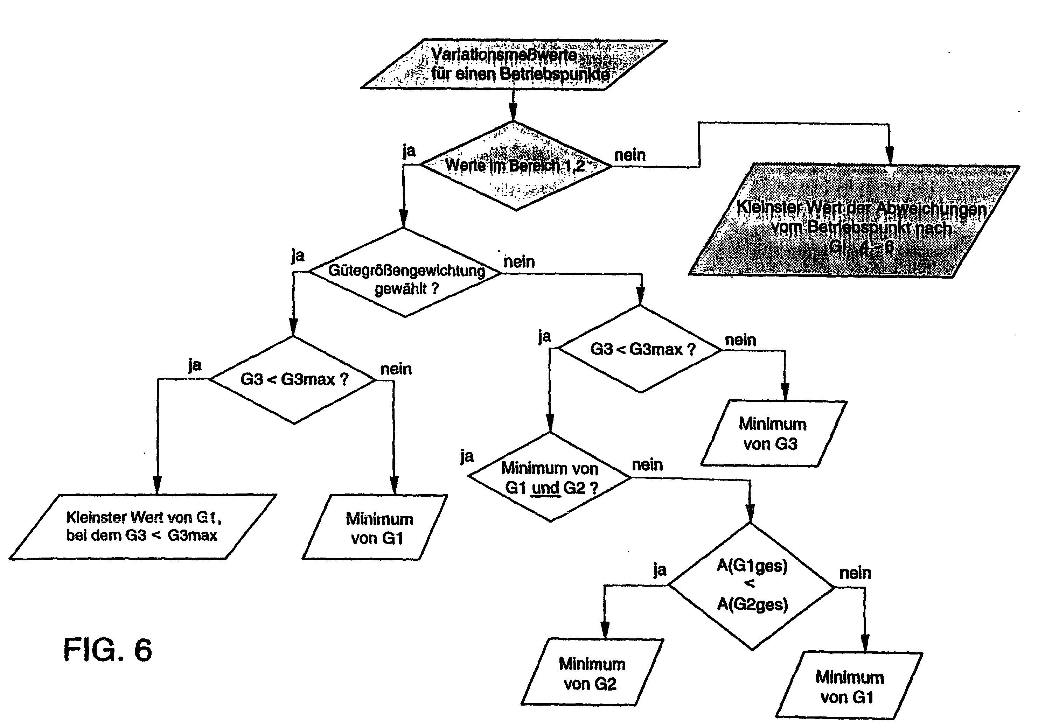

In Fig. 6 ist ein Flußdiagramm zur Auswahl des jeweils besten Meßwertes dargestellt, wobei eine dritte Gütegröße G3 berücksichtigt wird und das Flußdiagramm sich auf die Einteilung der Fig. 5 bezieht. Zunächst werden die Meßpunkte der Bereiche B1 und B2 betrachtet, bei denen die Zielvorgabe ZW bzw. die erweiterte Zielvorgabe EZW für beide Gütegrößen G1, G2 erreicht worden ist.

Ist eine Priorisierung einer Gütegröße G1, G2 vorgenommen worden, wird der Meßpunkt X mit dem niedrigsten Ergebnis der Gütegröße G1 ausgewählt, bei dem die Gütegröße G3 den maximalen Wert nicht überschreitet. Wenn bei den Meßwerten aus den Bereichen B1 und B2 jeder Punkt den Maximalwert G3max der Gütegröße G3 überschreitet, wird der Punkt mit minimaler Gütegröße G3 ausgewählt.

Ist keine Optimierungsgewichtung der Gütegrößen vorgegeben worden, existieren keine Meßwerte aus dem Bereich B2. In diesem Fall sind beide Gütegrößen gleichwertig.

Berücksichtigt werden nun die Meßwerte, bei denen die dritte Gütegröße G3 den maximalen Wert nicht überschreitet.

Bei diesen Punkten wird untersucht, ob der Wert existiert, der gleichzeitig das Minimum beider Gütegrößen G1 und G2 darstellt. Andernfalls wird das Minimum der Größe ausgewählt, dessen Abweichung vom Gesamtziel des Abgastestes höher lag.

Existiert kein Meßwert, bei dem das Ziel der dritten Gütegröße G3 erreicht wird, so wird der Punkt ausgewählt, bei dem diese Größe minimal ist.

Liegt keiner der Meßpunkte in den Bereichen B1 oder B2, ist die Zielvorgabe nicht erreicht worden. Für die Optimierung wird der Punkt mit der geringsten Abweichung beider Zielwerte ausgewählt. Bei der Berechnung der Abweichung muß wiederum nach Gütebereichen unterschieden werden, wobei die Meßwerte zuvor normiert werden müssen. Im Bereich B3 ist die Zielvorgabe der Gütegröße G1 erreicht worden. Die Abweichung ergibt sich aus Gl. 4. Im Bereich 4 wurden beide Zielvorgaben verfehlt. Die Abweichung ergibt sich aus dem Abstand zum Zielpunkt ZW des Bereiches B2 (Gl. 5). In den Bereichen B5 und B6 berechnet sich die Abweichung nach Gl. 6.

Bereich B3:

$$A = M_{G2}/Ziel_2 - 1 \qquad\qquad Gl.\ 4$$

Bereich B4:

$$A = \sqrt{(M_{G1}/Ziel_1 - 1)^2 + (M_{G2}/Ziel_2 - 1)^2} \qquad\qquad Gl.\ 5$$

Bereiche B5 und B6:

$$A = M_{G1}/Ziel_1 - 1 \qquad\qquad Gl.\ 6$$

mit

A     normierte Abweichung der Gütegrößen eines Meßwertes von der Zielvorgabe
$M_{G1}$     Meßwert der Gütegröße G1 [g/h]
$M_{G2}$     Meßwert der Gütegröße G2 [g/h]
$Ziel_1$     Zielvorgabe der Gütegröße G1 [g/h]
$Ziel_2$     Zielvorgabe der Gütegröße G2 [g/h]

Für weitere Berechnungen wird ein neues Motoremissionskennfeld mit den optimierten Betriebspunkten erstellt.

Nach der Optimierung werden die Applikationsparameter des ausgewählten Meßpunktes sowie Drehzahl und Einspritzmenge des Betriebspunktes in die Applikationsdatei geschrieben, um die Änderung im Motorsteuergerät durchführen zu können.

Weiterhin wird ein Meßprogramm mit Variationen der Applikationsparameter erstellt. Die Ermittlung der Variationen wird nachfolgend erläutert.

Nach dem Einlesen der Hochrechnungswerte werden die Leistungsbereiche des Motors entsprechend ihrer Verweildauer gewichtet und in einer Datei dem nachfolgenden Modul Getriebe-CVT zur Verfügung gestellt. Die Einteilung der Leistungsbereiche muß vom Benutzer gewählt und in eine Datei gespeichert werden.

Für Betriebspunkte, bei denen die Zielvorgabe der Gütegrößen durch die vorhandenen Messungen nicht erreicht wird, muß ein Meßprogramm erstellt werden. Dabei sollen weitere Variationen der Applikationsparameter durchgeführt werden, so daß die Gütegrößen die Zielvorgabe erreichen.

Mit Hilfe der vorhandenen Meßwerte wird ein fiktiver Meßwert der Gütegrößen ermittelt, der die Zielvorgabe erfüllt. Aufgrund der Abhängigkeit der Gütegrößen von den Applikationsparametern kann dann auf die Einstellung der Parameter für das Meßprogramm geschlossen werden. Sowohl der fiktive Meßwert als auch die daraus ermittelten Applikationsparameter werden durch Interpolation bzw. Extrapolation ermittelt.

Da die genaue Abhängigkeit der Gütegrößen von den Parametern durch wenige Meßwerte nicht ermittelt werden kann, wird mit einer linearen Abhängigkeit gerechnet.

Dies ist zulässig, da es sich bei dieser Betrachtung lediglich um ein Meßprogramm handelt, welches am Prüfstand durchgeführt und verifiziert werden muß. Die durch lineare Interpolation oder Extrapolation berechneten fiktiven Meßwerte der Gütegrößen werden nicht für die Optimierungsberechnung verwendet.

Dabei ist eine Interpolation zwischen zwei Punkten einer Extrapolation vorzuziehen, da diese durch die in der Realität vorhandene nichtlineare Abhängigkeit der Gütegrößen ungenauer ist.

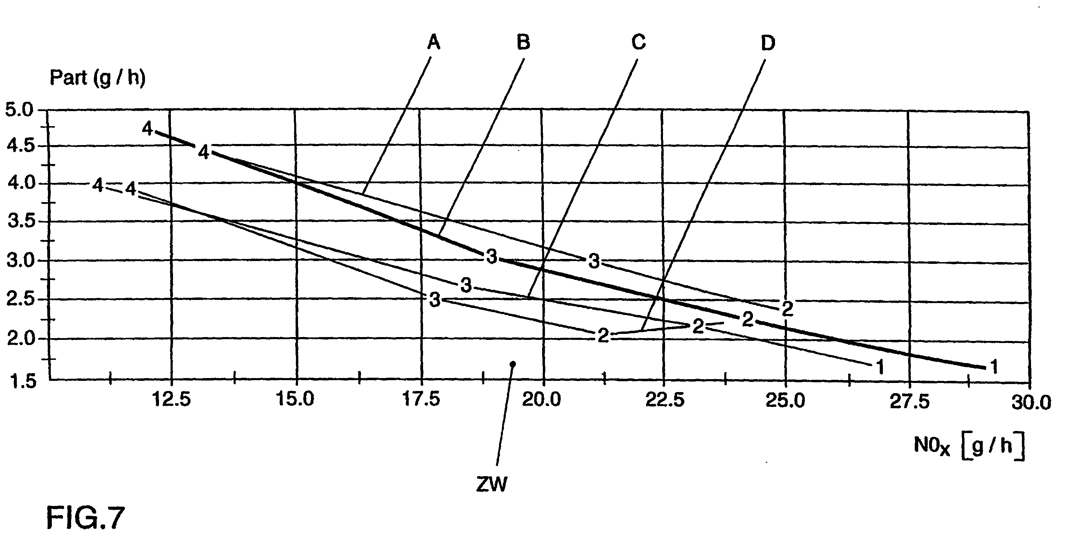

Fig. 7 zeigt ein Beispiel einer Variation des Spritzbeginns bzw. Förderbeginns, und der Abgasrückführung für einen Motorbetriebspunkt bei einer Drehzahl von 1500 U/min und einem Drehmoment von 44,8 Nm sowie einer Einspritzmenge $M\_E$ von 10,6 mg/Hub und einem effektiven Mitteldruck von 44,8 bar. Dargestellt ist der NOx-Gehalt gegenüber der Partikelgröße der Emission des Dieselmotors. Die Punkte 1, 2, 3 und 4 sowie die vier Kurvendarstellungen A, B, C und D entsprechend den in der Tab. 1 dargestellten Werten:

Tab. 1

| Variation ARF | 1 | 2 | 3 | 5 |
|---|---|---|---|---|
| M_LSoll [mg/Hub] | 470,00 | 456,66 | 423,33 | 356,66 |
| Variation SB | A | B | C | D |
| .SB_SOLL[°KW] | 0,16 | 1,20 | 3,07 | 5,48 |

Der Punkt Z ist der gewünschte und vorgegebene Zielpunkt der Applikation. Aus der Fig. 7 geht der hyperbolische Zusammenhang der Abgasrückführung auf die gewählten Gütegrößen NOx und Partikel gut hervor. Die richtige bzw. beste Applikation für den Spritzbeginn SB_Soll bezüglich des vorgegebenen Zielpunktes Z ist der Wert 1,2°KW (KW = Kurbelwellenwinkel). Für die Einstellung des Werts der rückgeführten Luft M_LSoll der Abgasrückführung ARF ist ein Wert zwischen 3 und 4 akzeptabel. In der Festlegung des Zielpunktes ist ferner die Gewichtung der Massen der verschiedenen Gütegrößen enthalten. Beispielsweise hängt die richtige Auslegung der Abgasrückführung davon ab, ob der prozentuale Anteil der Partikel größer oder kleiner als der NOx-Anteil in dem betrachteten Betriebspunkt ist.

Die Auswahl der richtigen Einstellung, die oben durch die Interpretation der Fig. 7 erfolgt ist, wird durch das Motor-Tool MT automatisch durchgeführt. Durch die Kenntnis des Ziels kann ähnlich der oben beschriebenen Vorgehensweise eine Einstellung der Verstellgrößen ermittelt werden. Es wird die dem Zielpunkt Z naheliegenste Einstellung ausgewählt.

Zusammenfassend gibt das Modul Motor-Tools MT neben dem Meßauftrag, der nur bei Bedarf erstellt wird, das optimierte Kennfeld mit den Emissions- oder Verbrauchswerten der Gütegrößen nach der Optimierung sowie die dazugehörigen Applikationswerte für das Motorsteuergerät aus. Denn nicht nur die Ermittlung der Konsequenzen der Optimierung ist sinnvoll, vielmehr sind bei einer Verbesserung die Werte der Verstellgrößen gefragt, die in das Steuergerät appliziert werden sollen.

Hochrechnung

Das Modul Hochrechnung hat die Aufgabe, schnell und ohne großen Aufwand zu Trendaussagen zu kommen. Diese Trendaussagen sollen für den Verbrauch, die Emissionen und die Fahrleistungen gemacht werden, wobei der Einfluß verschiedener Parameter, die bei der Entwicklung und der Konstruktion eines Fahrzeugs einfließen, auf das Fahrzeug untersucht und abgeschätzt wird. Mit anderen Worten, das Modul Hochrechnung führt eine Simulation eines Fahrzeugs aus.

Eingabeparameter für die Hochrechnung sind beispielsweise Fahrzeugdaten, Reifendaten, Motorkennfeld, Motordaten, Motormanagement, Nebenaggregate, Getriebedaten und Steuerdaten.

Die Gruppe Fahrzeugdaten enthält Informationen, die sich ausschließlich auf das Gesamtfahrzeug beziehen, wie beispielsweise Fahrzeug-Gesamtgewicht, cw-Wert usw. Die anderen Parameter betreffen einzelne Aggregate wie Motor etc. und sind unabhängig vom Fahrzeug. Somit lassen sich aus verschiedenen Aggregaten neue Fahrzeugkonstellationen erstellen.

In dem Parameter Steuerdaten sind Informationen abgelegt, die das Fahrprofil und bei Bedarf das Schaltverhalten beschreiben. Sie haben mit dem Fahrzeug direkt nichts zu tun, sondem beschreiben ausschließlich das für die Berechnung beispielsweise der Emissionen oder des Verbrauchs notwendige Fahrverhalten.

Ergebnisse des Berechnungsmoduls Hochrechnung können auf zwei Arten ausgegeben werden. Da die Berechnung modal erfolgt, können die berechneten Werte entweder modal ausgegeben werden oder sie werden für größere Zeitintervalle summiert und als integrierte Werte ausgegeben.

Gesamtablauf Triebstrangmanagement

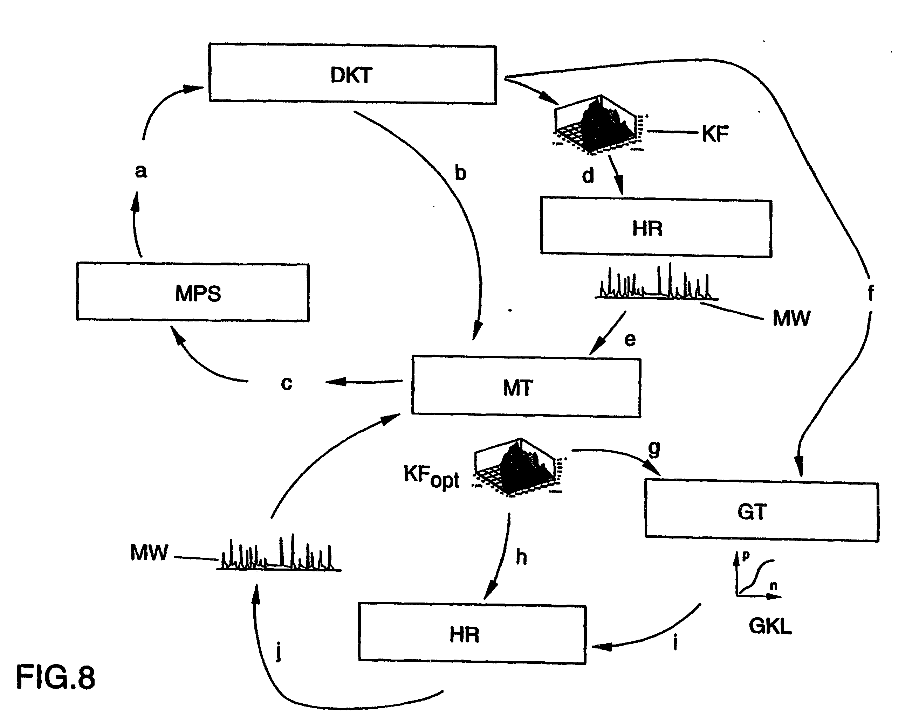

In der Fig. 8 ist der Gesamtablauf bzw. alle möglichen Varianten des Zusammenspiels der einzelnen Module des Applikationswerkzeugs Triebstrangmanagement in einem schematischen Gesamtablaufplan dargestellt. Die wesentlichen Bestandteile des Gesamtsystems sind die oben vorgestellten Module Hochrechnung HR, Motor-Tool MT und Getriebe-Tool GT.

Auf einem Motorprüfstand MPS werden Kennfelder KF einer Verbrennungskraftmaschine oder Motors durch Vorgabe bestimmter, für sinnvoll erachteter Applikationsparameter pro Betriebspunkt für bestimmte, zu optimierende Größen gemessen. Optimierende Größen sind beispielsweise der Kraftstoffverbrauch, die Emission bestimmter Abgase oder Partikelgrößen und die Abgastemperatur. Zur Ermittlung eines Kennfeldes KF auf dem Prüfstand MPS sind sinnvolle Schrittweiten bezüglich der Drehzahl, beispielsweise Schritte von 250 U/min, und bezüglich des Drehmoments, beispielsweise Schritte von 5 -10 Nm, festgelegt. Daher enthält ein Kennfeld KF eine diskrete, dreidimensionale Funktion auf einem bestimmten Definitionsbereich der Drehzahl bzw. des Drehmoments. Diese Kennfelder KF bilden den Ausgangspunkt der weiteren Optimierung.

Diese meßtechnisch ermittelten Kennfelder KF durchlaufen in einem ersten Schritt a ein Konvertierungs-Tool DKT, das die Kennfelder KF an die Anforderungen des jeweiligen Moduls, beispielsweise Datenformate etc., anpaßt. Da in dem Konvertierungs-Tool DKT letztlich nur Datenformate an das nachfolgende Optimierungs-Tool angepaßt werden, braucht auf das Modul hier nicht näher eingegangen werden.

Das oder die konvertierten Kennfelder KF können nun in einem zweiten Schritt b direkte Eingangsgrößen des im vorangegangenen beschriebenen Moduls Motor-Tool MT sein, das eine Optimierung bezüglich vorgegebener Gütegrößen durch Variation der Applikationsparameter vornimmt. Eine Ausgangsgröße des Motor-Tools KF ist ein optimiertes Motorkennfeld $KF_{opt}$. Ist mit diesem Schritt die Optimierung beendet, so ergibt sich als Endergebnis eine optimierte Motorapplikation. Wird die Optimierung nicht beendet, so kann es sein, daß das oder die Kennfelder oder bestimmte Betriebspunkte des Motors für andere Applikationsparameter auf dem Prüfstand MPS neu bestimmt werden müssen, es wird daher ein Meßauftrag erteilt (Schritt c).

In einer weiteren Variante des Triebstrangmanagement wird das Motorkennfeld KF des Daten-Konvertierungs-Tools DKT in das Modul Hochrechnung HR (Schritt d) eingegeben, wo die Simulation beispielsweise eines Abgastests unter Berücksichtigung von Parametern wie Fahrzeugdaten, Reifendaten, Motordaten, Abgastestinfos und/oder Getriebedaten durchgeführt wird. Ausgegeben werden die oben bereits beschriebenen Modalwerte MW, die in einem Schritt e Eingangsgrößen für die Optimierung der Betriebspunkte in dem Modul Motor-Tool MT dienen. Ausgegeben vom Modul Motor-Tool MT wird wiederum ein optimiertes Kennfeld $KF_{opt}$ undloder ein Meßauftrag an den Motorprüfstand MPS (Schritt c).

Das optimierte Motorkennfeld $KF_{opt}$ (oder Kennfelder) kann wiederum in einem Schritt h in das Modul Hochrechnung HR eingegeben werden und kann entweder als Endergebnis im Fall der Beendigung der Optimierung Abgastestergebnisse oder zur Weiterführung der Optimierung Modalwerte MW liefern, die in einem Schritt j wiederum als Eingangsgrößen des Moduls Motor-Tool MT dienen können.

Das vom Daten-Konvertierungs-Tool DKT ausgegebene Motorkennfeld KF kann in einem Schritt f direkte Eingangsgröße des Getriebe-Tools GT sein, das einen optimierten Weg durch das Kennfeld oder Gütekennfeld KF sucht. Als Ergebnis der Optimierung ergibt sich eine Übersetzungs- oder Getriebekennlinie GKL, die in einem Schritt i als Eingangsparameter der Hochrechnung HR verwendet werden kann, um Abgastestergebnisse bzw. Modalwerte aus einem optimierten Motorkennfeld $KF_{opt}$ zu berechnen und in einem erneuten Durchgang (Schritt j) eventuell weiter zu optimieren. Ferner kann das Getriebe-Tool GT auch direkt eine aus der optimierten Getriebekennlinie abgeleitete optimierte Getriebeapplikation ausgeben, falls nur ein optimaler Weg durch ein Kennfeld KF gesucht wird.

Das Triebstrangmanagement-Tool weist daher fünf Aspekte auf:

a) Direktes Optimieren eines Motor-Kennfeldes KF durch das Modul Motor-Tool MT,

b) Direktes Bestimmen einer optimale Getriebeapplikation in einem vorgegebenen Motor-Kennfeld KF durch das Modul Getriebe-Tool GT,

c) Optimieren eines Motor-Kennfeldes KF unter Berücksichtigung von Fahrzeugparametem mit den Modulen Hochrechnung HR und Motor-Tool MT,

d) Optimieren von Motor-Kennfeldern KF und Bestimmen einer dazu angepaßten optimalen Getriebeapplikation ohne Berücksichtigung von Fahrzeugparametem mit den Modulen Motor-Tool MT und Getriebe-Tool GT, und

e) Optimieren von Motor-Kennfeldem KF und Bestimmen einer dazu angepaßten optimalen Getriebeapplikation unter Berücksichtigung von Fahrzeugparametern unter Verwendung der Module Hochrechnung HR, Motor-Tool MT und Getriebe-Tool.

Das Applikationswerkzeug Triebstrangmanagement erlaubt daher eine automatische Optimierung verschiedener einzelner Fahrzeugkomponenten sowie deren Verknüpfung einschließlich einer Optimierung eines gesamten Triebstranges auf der Basis von Prüfstandsmessungen unter Berücksichtigung eines projektierten oder vorhandenen Fahrzeugs. Die Optimierung kann im Prinzip für Fahrzeuge mit stufenlosen Getrieben, Stufenautomaten oder Handschaltgetrieben durchgeführt werden, wobei bei den Stufengetrieben im Triebstrangmanagement der Freiheitsgrad für die Getriebeabstimmung entfällt. Daher ist für die Erstellung einer optimalen Getriebekennlinie ein CVT-Getriebe, d. h. stufenloses Getriebe, Voraussetzung.

**BEZUGSZEICHENLISTE**

| | |
|---|---|
| $\alpha_1$ | Gewichtsfaktor 1 |
| $\alpha_2$ | Gewichtsfaktor 2 |
| $\alpha_3$ | Gewichtsfaktor 3 |
| A | Normwert |
| AB | Abbruchbedingung |
| AGBP | Anteil der Betriebspunkte an der Gesamtemission |
| AMP | Ausgabe eines Meßprogramms |
| ANA | Ausgabe der neuen Applikation |
| ANMKF | Ausgabe eines neuen Motorkennfeldes |
| B1 | Bereich 1 |
| B2 | Bereich 2 |
| B3 | Bereich 3 |
| B4 | Bereich 4 |
| B5 | Bereich 5 |
| B6 | Bereich 6 |
| DKT | Daten-Konvertierungs-Tool |
| E | Ende |
| EZW | Erweiterter Zielwert |
| G1 | Gütegröße 1 |
| G2 | Gütegröße 2 |
| G3 | Gütegröße 3 |
| G3max | Maximalwert der Gütegröße 3 |
| GKF | Gütekennfeld |
| GKL | Getriebe-Kennlinie |
| GT | Getriebe-Tool |
| GWBP | Gewichtung der Betriebspunkte |
| HR | Hochrechnung |
| In1 | Eingabe 1 |
| In2 | Eingabe 2 |
| In3 | Eingabe 3 |
| In4 | Eingabe 4 |
| In5 | Eingabe 5 |
| IW | Ist-Wert |
| J | Ja |
| $KF_1$ | Kennfeld 1 |
| $KF_{1norm}$ | Normiertes Kennfeld 1 |
| $KF_{1trans}$ | Transformiertes Kennfeld 1 |
| $KF_2$ | Kennfeld 2 |
| $KF_{2norm}$ | Normiertes Kennfeld 2 |
| $KF_{2trans}$ | Transformiertes Kennfeld 2 |
| $KF_3$ | Kennfeld 3 |
| $KF_{3norm}$ | Normiertes Kennfeld 3 |
| $KF_{3trans}$ | Transformiertes Kennfeld 3 |
| MGBP | Massengewichtung der Betriebspunkte |

| | |
|---|---|
| MPO | Motorparameter-Optimierung |
| MPS | Motorprüfstand |
| MT | Motor-Tool |
| MW | Modalwerte |
| n | Drehzahl |
| N | Nein |
| $N_1$ | Normierungsfunktion 1 |
| $N_2$ | Normierungsfunktion 2 |
| $N_3$ | Normierungsfunktion 3 |
| P | Leistung |
| Part | Partikel |
| Pme | effektiver Mitteldruck |
| S | Start |
| X | Meßwert |
| ZGBP | Zeitliche Gewichtung der Betriebspunkte |
| ZVBP | Zielvorgabe der Betriebspunkte |
| ZW | Zielwert |

**Patentansprüche**

1. Verfahren zur Abstimmung eines Triebstrangs eines Kraftfahrzeugs bestehend aus einer Verbrennungskraftmaschine und einem Getriebe, das die folgenden Schritte aufweist:

Vorgeben eines Kennfeldes (KF) bei einer Motorapplikation insbesondere bezüglich der Emissionen und/oder Kraftstoffverbrauch und/oder Abgastemperatur,
Bestimmung (HR) von Modalwerten (MW) unter Verwendung des Kennfeldes (KF), wobei die Modalwerte (MW) über mindestens einen Fahrzyklus für ein vorgegebenes Fahrgeschwindigkeitsprofil bestimmt werden,
Auswählen der zu optimierenden Betriebspunkte aus den Modalwerten (MW),
Optimieren der Motorabstimmung in den ausgewählten Betriebspunkten hinsichtlich einer vorgegebenen Optimierungsstrategie,
Aktualisieren des Kennfeldes (KF) mit den aus der Optimierung erhaltenen Werte in ein optimiertes Kennfeld ($KF_{opt}$).

2. Verfahren zur Abstimmung eines Triebstrangs eines Kraftfahrzeugs bestehend aus einer Verbrennungskraftmaschine und einem Getriebe, das die folgenden Schritte aufweist:

Vorgeben von mindestens einem Kennfeld (KF) bei einer Motorapplikation insbesondere bezüglich der Emissionen und/oder Kraftstoffverbrauch und/oder Abgastemperatur,
Bestimmung (HR) von Modalwerten (MW) unter Verwendung des mindestens einen Kennfeldes (KF), wobei die Modalwerte (MW) über mindestens einen Fahrzyklus für ein vorgegebenes Fahrgeschwindigkeitsprofil bestimmt werden,
Auswähle der zu optimierenden Betriebspunkte des Motorkennfeldes (KF) aus den Modalwerten (MW),
Optimieren der Motorabstimmung in den ausgewählten Betriebspunkten bezüglich einer vorgegebenen Optimierungsstrategie,
Aktualisieren des mindestens einen Kennfeldes (KF) mit den aus der Optimierung erhaltenen Werten in ein optimiertes Kennfeld ($KF_{opt}$, KF1, KF2, KF3),
Bestimmen eines Gütekennfeldes (GKF) aus dem mindestens einen optimierten Kennfeld ($KF_{opt}$, KF1, KF2, KF3),
Berechnen einer optimierten Getriebekennlinie (GKL) in dem optimierten Gütekennfeldes (GKF) bezüglich einer vorgegeben Optimierungsstrategie der Getriebeabstimmung.

3. Verfahren nach einem der vorangegangenen Ansprüche, **dadurch gekennzeichnet, daß** der Triebstrang ein CVT-Getriebe umfaßt.

4. Verfahren nach einem der vorangegangenen Ansprüche, **dadurch gekennzeichnet, daß** das Kennfeld (KF) auf einem Prüfstand ermittelt wird.

**5.** Verfahren nach einem der vorangegangenen Ansprüche, **dadurch gekennzeichnet, daß** in die Bestimmung der Modalwerte (MW) Fahrzeugdaten und/oder Motordaten und/oder Reifendaten und/oder Getriebedaten einfließen.

**6.** Verfahren nach Anspruch 5, **dadurch gekennzeichnet, daß** aus den Modalwerten (MW) eine zeitliche Gewichtung der Betriebspunkte (ZGBP) vorgenommen wird, indem jeder Modalwert (MW) in ein vorgegebenes Kennfeldraster klassiert wird.

**7.** Verfahren nach Anspruch 6, **dadurch gekennzeichnet, daß** eine Massengewichtung der Betriebspunkte (MGBP) durch Addition der auftretenden Emissionen für jeden Rasterbereich vorgenommen wird.

**8.** Verfahren nach Anspruch 7, **dadurch gekennzeichnet, daß** der Anteil jedes Betriebspunktes an der Gesamtemission (AGBP) berechnet wird.

**9.** Verfahren nach Anspruch 8, **dadurch gekennzeichnet, daß** diejenigen Betriebspunkte, deren Anteile an der Gesamtemission größer als eine vorgegebene Schwelle sind, zur Optimierung ausgewählt werden.

**10.** Verfahren nach einem der vorangegangenen Ansprüche, **dadurch gekennzeichnet, daß** für jeden beteiligten Betriebspunkt ein Zielwert (ZW) vorgegeben wird, eine Variation der Motorapplikation durch vorgegebene Variationen der Motorstellgrößen durchgeführt wird und daraus eine optimierte Applikation berechnet wird, die dem Zielpunkt (ZW) zumindest nahe kommt.

**11.** Verfahren nach Anspruch 10, **dadurch gekennzeichnet, daß** ein Gesamtzielwert für die beteiligten Betriebspunkte vorgegeben wird, aus dem die einzelnen Zielwerte (ZW) jedes beteiligten Betriebspunktes abgeleitet werden, so daß die Summe der Zielwerte (ZW) den Gesamtzielwert bildet.

**12.** Verfahren nach einem der Ansprüche 10 oder 11, **dadurch gekennzeichnet, daß** die Variationen der Motorverstellgrößen eines Betriebspunktes einer gespeicherten Datei entnommen werden.

**13.** Verfahren nach Anspruch 12, **dadurch gekennzeichnet, daß** die Variationen Meßwerte und eine Interpolation bzw. Extrapolation vermessener Betriebspunkte beinhalten.

**14.** Verfahren nach Anspruch 12 oder 13, **dadurch gekennzeichnet, daß** eine Messung der Variationen eines Betriebspunkts vorgenommen wird, falls keine ausreichenden Werte der Variation der Motorverstellgrößen in der Datei vorliegen.

**15.** Verfahren nach einem der Ansprüche 10 bis 14, **dadurch gekennzeichnet, daß** zur Optimierung des Motors auch Betriebspunkte herangezogen werden, die benachbart zu den aus den Modalwerten (MW) bestimmten Betriebspunkten sind.

**16.** Verfahren nach einem der Ansprüche 2 bis 15, **dadurch gekennzeichnet, daß** das mindestens eine optimierte Kennfeld ($KF_1$, $KF_2$, $KF_3$) mit einer vorgegebenen Normierungskennlinie ($N_1$, $N_2$, $N_3$) auf einen vorgegebenen Wertebereich normiert wird, so **daß** sich ein normiertes Kennfeld ($KF_{1norm}$, $KF_{2norm}$, $KF_{3norm}$) ergibt.

**17.** Verfahren nach Anspruch 16, **dadurch gekennzeichnet, daß** das normierte Kennfeld ($KF_{1norm}$, $KF_{2norm}$, $KF_{3norm}$) einer Transformation von Motordrehmoment in Motorleistung unterzogen wird, so daß sich ein transformiertes Kennfeld ($KF_{1trans}$, $KF_{2trans}$, $KF_{3trans}$) ergibt.

**18.** Verfahren nach Anspruch 17, **dadurch gekennzeichnet, daß** mehrere transformierte Kennfelder ($KF_{1trans}$, $KF_{2trans}$, $KF_{3trans}$) durch eine Verknüpfungsvorschrift in ein Gütekennfeld (GKF) umgewandelt werden, aus dem eine optimale Getriebekennlinie (GL) mittels einer vorgegebenen Optimierungsstrategie bestimmt wird.

**19.** Verfahren nach Anspruch 18, **dadurch gekennzeichnet, daß** die Verknüpfungsvorschrift durch eine Addition der transformierten Kennfelder ($KF_{1trans}$, $KF_{2trans}$, $KF_{3trans}$) gebildet wird, wobei jedes transformierte Kennfeld mit einem Gewichtsfaktor. ($\alpha_1$, $\alpha_2$, $\alpha_3$) multipliziert ist.

**20.** Verfahren nach einem der vorangegangenen Ansprüche, **dadurch gekennzeichnet, daß** einzelne oder mehrere Schritte wiederholt werden.

**21.** Verfahren nach Anspruch 20, **dadurch gekennzeichnet, daß** die Optimierung der Motorabstimmung und/oder der Getriebeabstimmung bis zum Erreichen eines vorgegebenen Abbruchkriteriums erfolgt.

**22.** Verfahren nach Anspruch 21, **dadurch gekennzeichnet, daß** das Abbruchkriterium erfüllt ist, wenn keine Verbesserung der Werte insbesondere aus der Gruppe Emissionen, Kraftstoffverbrauch und/oder Abgastemperatur erzielt wird.

**23.** Vorrichtung zur Durchführung des Verfahrens nach einem der Ansprüche 1 bis 22 mit einem Motorprüfstand (MPS) zum Ermitteln von Kennfeldern (KF), sowie einer Datenverarbeitungsvorrichtung mit einem Mittel (DKS) zum Vorgeben eines Kennfeldes (KF) bei einer Motorapplikation, einer Hochrechnung (HR) zur Bestimmung von Modalwerten (MW) unter Verwendung des Kennfeldes (KF), wobei die Modalwerte (MW) über mindestens einen Fahrzyklus für ein vorgegebenes Fahrgeschwindigkeitsprofil bestimmt werden, einem Motortool (MT) zum Auswählen der zu optimierenden Betriebspunkte aus den Modalwerten (MW) und zur Optimierung der ausgewählten Betriebspunkte, und einem Getriebetool (GT) zur Optimierung eines Getriebes.

**Claims**

**1.** Method of regulating a drive train of a motor vehicle consisting of an internal combustion engine and a transmission, comprising the steps of:

Predetermining a family of characteristics (KF) for an engine application, in particular with respect to the emissions and/or fuel consumption and/or exhaust gas temperature,
Determining (HR) modal values (MW) using the family of characteristics (KF), wherein the modal values (MW) are determined over at least one driving cycle for a predetermined travel velocity profile,
Selecting from the modal values (MW) the operating points to be optimised,
Optimising the engine regulation in the selected operating points with regard to a predetermined optimisation strategy,
Updating the family of characteristics (KF) with the values obtained from the optimisation to produce an optimised family of characteristics ($KF_{opt}$).

**2.** Method of regulating a drive train of a motor vehicle consisting of an internal combustion engine and a transmission, comprising the steps of:

Predetermining at least one family of characteristics (KF) for an engine application, in particular with respect to the emissions and/or fuel consumption and/or exhaust gas temperature,
Determining (HR) modal values (MW) using the at least one family of characteristics (KF), wherein the modal values (MW) are determined over at least one driving cycle for a predetermined travel velocity profile,
Selecting from the modal values (MW) the operating points, which are to be optimised, of the family of characteristics (KF) relating to the engine,
Optimising the engine regulation in the selected operating points with respect to a predetermined optimisation strategy,
Updating the at least one family of characteristics (KF) with the values obtained from the optimisation to produce an optimised family of characteristics ($KF_{opt}$, KF1, KF2, KF3),
Determining a family of performance characteristics (GKF) from the at least one optimised family of characteristics ($KF_{opt}$, $KF_1$, $KF_2$, $KF_3$),
Calculating an optimised transmission characteristic curve (GKL) in the optimised family of performance characteristics (GKF) with respect to a predetermined optimisation strategy of the transmission regulation.

**3.** Method as claimed in any one of the preceding claims, **characterised in that** the drive train comprises a continuously variable transmission (CVT).

**4.** Method as claimed in any one of the preceding claims, **characterised in that** the family of characteristics (KF) is determined on a testing stand.

**5.** Method as claimed in any one of the preceding claims, **characterised in that** vehicle data and/or engine data and/or tyre data and/or transmission data influence the determination of the modal values (MW).

**6.** Method as claimed in claim 5, **characterised in that** from the modal values (MW) the operating points (ZGBP) are weighted with respect to time, **in that** each modal value (MW) is classified in a predetermined family of characteristics raster.

**7.** Method as claimed in claim 6, **characterised in that** a mass weighting of the operating points (MGBP) is performed by the addition of the occurring emissions for each raster range.

**8.** Method as claimed in claim 7, **characterised in that** the proportion of each operating point with respect to the total emission (AGBP) is calculated.

**9.** Method as claimed in claim 8, **characterised in that** the particular operating points, of which the proportions of the total emission are greater than a predetermined threshold, are selected for the optimisation.

**10.** Method as claimed in any one of the preceding claims, **characterised in that** for each operating point involved, a target value (ZW) is predetermined, a variation of the engine application is performed by predetermined variations in the engine control variables and from this an optimised application is calculated which at least comes close to the target point (ZW).

**11.** Method as claimed in claim 10, **characterised in that** for the operating points involved a total target value is predetermined, from which the individual target values (ZW) of each operating point involved are derived, so that the sum of the target values (ZW) produces the total target value.

**12.** Method as claimed in any one of claims 10 or 11, **characterised in that** the variations in the engine control variables of an operating points are taken from a stored data file.

**13.** Method as claimed in claim 12, **characterised in that** the variations include measurement values and an interpolation or extrapolation of measured operating points.

**14.** Method as claimed in claim 12 or 13, **characterised in that** the variations of an operating point are measured, if the values of the variation of the engine control variables in the data file are insufficient.

**15.** Method as claimed in any one of claims 10 to 14, **characterised in that** in order to optimise the engine, operating points are also used which are adjacent to the operating points determined from the modal values (MW).

**16.** Method as claimed in any one of claims 2 to 15, **characterised in that** the at least one optimised family of characteristics ($KF_1$, $KF_2$, $KF_3$) are standardised to a predetermined value range by means of a predetermined standardisation characteristic curve ($N_1$, $N_2$, $N_3$) so as to produce a standardised family of characteristics ($KF_{1norm}$, $KF_{2norm}$, $KF_{3norm}$).

**17.** Method as claimed in claim 16, **characterised in that** the standardised family of characteristics ($KF_{1norm}$, $KF_{2norm}$, $KF_{3norm}$) is subjected to a transformation from engine torque to engine power so as to produce a transformed family of characteristics ($KF_{1trans}$, $KF_{2trans}$, $KF_{3trans}$).

**18.** Method as claimed in claim 17, **characterised in that** several transformed families of characteristics ($KF_{1trans}$, $KF_{2trans}$, $KF_{3trans}$) are converted by means of a logic prescription into a family of performance characteristics (GKF), from which an optimum transmission characteristic curve (GL) is determined by means of a predetermined optimisation strategy.

**19.** Method as claimed in claim 18, **characterised in that** the logic prescription is formed by addition of the transformed families of characteristics ($KF_{1trans}$, $KF_{2trans}$, $KF_{3trans}$), wherein each transformed family of characteristics is multiplied by a weighting coefficient ($\alpha_1$, $\alpha_2$, $\alpha_3$).

**20.** Method as claimed in any one of the preceding claims, **characterised in that** individual or several steps are repeated.

**21.** Method as claimed in claim 20, **characterised in that** the regulation of the engine and/or transmission is optimised until a predetermined termination criterion is achieved.

**22.** Method as claimed in claim 21, **characterised in that** the termination criterion is met, if no improvement is achieved in the values, in particular from the group of emissions, fuel consumption and/or exhaust gas temperature.

**23.** Device for implementing the method as claimed in any one of claims 1 to 22, having an engine testing stand (MPS) for determining families of characteristics (KF), and a data processing device having a means (DKS) for predetermining a family of characteristics (KF) in an engine application, an extrapolation (HR) for determining modal values (MW) using the family of characteristics (KF), wherein the modal values (MW) are determined over at least one driving cycle for a predetermined travel velocity profile, an engine tool (MT) for selecting from the modal values (MW) the operating points which are to be optimised and for optimising the selected operating points, and a transmission tool (GT) for optimising a transmission.

**Revendications**

**1.** Procédé pour le réglage d'un ensemble moteur d'un véhicule automobile constitué d'un moteur à combustion interne et d'une transmission, comportant les étapes suivantes :

prescription d'un réseau de caractéristiques (KF) dans le cas d'une application au moteur notamment par rapport aux émissions et/ou à la consommation de carburant et/ou à la température de gaz d'échappement, détermination (HR) de valeurs modales (MW) en utilisant le réseau de caractéristiques (KF), les valeurs modales (MW) étant déterminées sur au moins un cycle de conduite pour un profil de vitesse de conduite prédéterminé,
sélection des points de fonctionnement à optimiser à partir des valeurs modales (MW),
optimisation du réglage du moteur aux points de fonctionnement sélectionnés selon une stratégie d'optimisation prédéterminée,
actualisation du réseau de caractéristiques (KF) avec les valeurs, obtenues à partir de l'optimisation, dans un réseau de caractéristiques optimisé ($KF_{opt}$).

**2.** Procédé pour le réglage d'un ensemble moteur d'un véhicule automobile constitué d'un moteur à combustion interne et d'une transmission, comportant les étapes suivantes :

prescription d'au moins un réseau de caractéristiques (KF) dans le cas d'une application au moteur notamment par rapport aux émissions et/ou à la consommation de carburant et/ou à la température de gaz d'échappement, détermination (HR) de valeurs modales (MW) en utilisant le ou les réseaux de caractéristiques (KF), les valeurs modales (MW) étant déterminées sur au moins an cycle de conduite pour un profil de vitesse de conduite prédéterminé,
sélection des points de fonctionnement à optimiser du réseau de caractéristiques de moteur (KF) à partir des valeurs modales (MW),
optimisation du réglage du moteur aux points de fonctionnement sélectionnés selon une stratégie d'optimisation prédéterminée,
actualisation du ou des réseaux de caractéristiques (KF) avec les valeurs, obtenues à partir de l'optimisation, dans un réseau de caractéristiques optimisé ($KF_{opt}$, KF1, KF2, KF3),
détermination d'un réseau de caractéristiques de qualité (GKF) à partir du ou des réseaux de caractéristiques optimisés ($KF_{opt}$, KF1, KF2, KF3),
calcul d'une courbe caractéristique de transmission optimisée (GKL) dans le réseau de caractéristiques de qualité (GKF) par rapport à une stratégie d'optimisation prédéterminée du réglage de la transmission.

**3.** Procédé selon l'une des revendications précédentes, **caractérisé en ce que** l'ensemble moteur comprend une transmission à variation continue dite CVT.

**4.** Procédé selon l'une des revendications précédentes, **caractérisé en ce que** le réseau de caractéristiques (KF) est déterminé sur un banc d'essai.

**5.** Procédé selon l'une des revendications précédentes, **caractérisé en ce que** des données de véhicule et/ou des données de moteur et/ou des données de pneu et/ou des données de transmission entrent dans la détermination des valeurs modales (MW).

**6.** Procédé selon la revendication 5, **caractérisé en ce qu'**on effectue à partir des valeurs modales (MW) une pondération temporelle des points de fonctionnement (ZGBP) en classant chaque valeur modale (MW) dans une trame de réseau de caractéristiques prédéterminée.

**7.** Procédé selon la revendication 6, **caractérisé en ce qu'**on effectue une pondération de masse des points de fonctionnement (MGBP) en additionnant les émissions apparues pour chaque domaine de trame.

**8.** Procédé selon la revendication 7, **caractérisé en ce qu'**on calcule la part de chaque point de fonctionnement dans l'émission globale (AGBP).

**9.** Procédé selon la revendication 8, **caractérisé en ce qu'**on sélectionne pour l'optimisation ceux des points de fonctionnement dont les parts dans l'émission globale sont supérieures à un seuil prédéterminé.

**10.** Procédé selon l'une des revendications précédentes, **caractérisé en ce qu'**on détermine une valeur visée (ZW) pour chaque point de fonctionnement concerné, on met en oeuvre une variation de l'application au moteur au moyen de variations prédéterminées des grandeurs réglantes de moteur et on calcule à partir de là une application optimisée qui s'approche au moins du point visé (ZW).

**11.** Procédé selon la revendication 10, **caractérisé en ce qu'**on prescrit pour les points de fonctionnement concernés une valeur visée globale à partir de laquelle on déduit les valeurs visées individuelles (ZW) de chaque point de fonctionnement concerné de telle sorte que la somme des valeurs visées (ZW) forme la valeur visée globale.

**12.** Procédé selon l'une des revendications 10 ou 11, **caractérisé en ce que** les variations des grandeurs réglantes de moteur d'un point de fonctionnement sont prises dans un fichier mémorisé.

**13.** Procédé selon la revendication 12, **caractérisé en ce que** les variations contiennent des valeurs mesurées et une interpolation ou une extrapolation de points de fonctionnement mesurés.

**14.** Procédé selon la revendication 12 ou 13,
**caractérisé en ce qu'**on effectue une mesure des variations d'un point de fonctionnement s'il n'y a dans le fichier aucune valeur suffisante de la variation des grandeurs réglantes de moteur.

**15.** Procédé selon l'une des revendications 10 à 14, **caractérisé en ce que**, pour l'optimisation du moteur, on exploite aussi des points de fonctionnement qui sont voisins des points de fonctionnement déterminés à partir des valeurs modales (MW).

**16.** Procédé selon l'une des revendications 2 à 15, **caractérisé en ce que** le ou les champs de caractéristiques optimisés ($KF_1$, $KF_2$, $KF_3$) sont normés avec une courbe caractéristique pour normer prédéterminée ($N_1$, $N_2$, $N_3$) sur un domaine de valeurs prédéterminé de manière à obtenir un réseau de caractéristiques normé ($KF_{1norm}$, $KF_{2norm}$, $KF_{3norm}$).

**17.** Procédé selon la revendication 16, **caractérisé en ce que** le réseau de caractéristiques normé ($KF_{1norm}$, $KF_{2norm}$, $KF_{3norm}$) est soumis à une transformation de couple moteur en puissance moteur de manière à obtenir un réseau de caractéristiques transformé ($KF_{1trans}$, $KF_{2trans}$, $KF_{3trans}$).

**18.** Procédé selon la revendication 17, **caractérisé en ce que** plusieurs réseaux de caractéristiques transformés ($KF_{1trans}$, $KF_{2trans}$, $KF_{3trans}$) sont convertis par une règle de combinaison en un réseau de caractéristiques de qualité (GKF) à partir duquel une courbe caractéristique de transmission optimale (GL) est déterminée au moyen d'une stratégie d'optimisation prédéterminée.

**19.** Procédé selon la revendication 18, **caractérisé en ce que** la règle de combinaison est formée par une addition des réseaux de caractéristiques transformés ($KF_{1trans}$, $KF_{2trans}$, $KF_{3trans}$), chaque réseau de caractéristiques transformé étant multiplié par un facteur de pondération ($\alpha_1$, $\alpha_2$, $\alpha_3$).

**20.** Procédé selon l'une des revendications précédentes, **caractérisé en ce que** certaines étapes individuelles ou plusieurs étapes sont répétées.

**21.** Procédé selon la revendication 20, **caractérisé en ce que** l'optimisation du réglage du moteur et/ou du réglage de la transmission s'effectue jusqu'à l'obtention d'un critère d'interruption prédéterminé.

22. Procédé selon la revendication 21, **caractérisé en ce que** le critère d'interruption est satisfait lorsqu'il n'y a plus d'amélioration des valeurs notamment du groupe :

émissions, consommation de carburant et/ou température de gaz d'échappement.

23. Dispositif pour la mise en oeuvre du procédé selon l'une des revendications 1 à 22, comportant un banc d'essai de moteur (MPS) pour déterminer des réseaux de caractéristiques (KF) ainsi qu'un dispositif de traitement de données avec un moyen (DKS) pour prescrire un réseau de caractéristiques (KF) dans le cas d'une application au moteur, une extrapolation (HR) pour déterminer des valeurs modales (MW) en utilisant le réseau de caractéristiques (KF), les valeurs modales (MW) étant déterminées sur au moins un cycle de conduite pour un profil de vitesse de conduite prédéterminé, un outil pour moteur (MT) pour sélectionner les points de fonctionnement à optimiser à partir des valeurs modales (MW) et pour optimiser les points de fonctionnement sélectionnés et un outil pour transmission (GT) pour optimiser une transmission.

FIG. 1

FIG. 2

FIG. 3

FIG. 4

FIG. 5

Variationsmeßwerte
für einen Betriebspunkte

Werte im Bereich 1,2

ja ← | → nein

Kleinster Wert der Abweichungen
vom Betriebspunkt nach
Gl. 4 - 6

Gütegrößengewichtung
gewählt ?

ja ← | → nein

G3 < G3max ?

ja ← | → nein

Kleinster Wert von G1,
bei dem G3 < G3max

Minimum
von G1

G3 < G3max ?

ja ← | → nein

Minimum von
G1 und G2 ?

ja ← | → nein

Minimum
von G3

A(G1ges)
<
A(G2ges)

ja ← | → nein

Minimum
von G2

Minimum
von G1

FIG. 6

FIG.7

FIG.8